# EUROPEAN PATENT SPECIFICATION

(11) **EP 1 117 958 B1**
(45) Date of publication and mention of the grant of the patent: **29.03.2006**
(21) Application number: 00940682.8
(22) Date of filing: 06.07.2000
(51) Int. Cl.: F16L 11/08

(54) **REINFORCED FLEXIBLE HOSE AND METHOD FOR THE PRODUCTION THEREOF**
VERSTÄRKTER SCHLAUCH UND VERFAHREN ZU SEINER HERSTELLUNG
TUYAU SOUPLE RENFORCE, PROCEDE ET TETE DE POMPAGE POUR LA PRODUCTION DE CELUI-CI

(30) Priority: 08.07.1999 IT VI990142
(43) Date of publication of application: 25.07.2001
(73) Proprietor: FITT S.p.A., 36066 Sandrigo (Vicenza) (IT)
(72) Inventor: MEZZALIRA, Rinaldo, I-36057 Arcugnano (IT)
(74) Representative: Vannini, Mario
(86) International application number: PCT/IB2000/000917
(87) International publication number: WO 2001/004530

(56) References cited:
- WO-A-98/25064
- DE-A- 19 854 585
- GB-A- 2 073 360
- US-A- 3 919 026
- US-A- 4 870 535

## Description

### Field of the invention

The present invention relates to a flexible hose made of a reinforced plastic material, which is particularly suitable for suction and transport of liquids and gases, as well as powders and solid material suspensions.

In particular, the present invention relates to a reinforced hose having an inner reinforcement generally shaped as a helicoidal spiral, which hose, in consideration of its peculiar shape, is commonly named spiral type hose.

Further features of the present invention relate to a method for the production of a hose.

### Background of the invention

Reinforced flexible hoses are known, and these essentially comprise an inside reinforcement element made of a relatively stiff or rigid generally spirally shaped material. The reinforcement element is immersed in a support layer or a main tubular wall made of a relatively flexible material. Such a hose, corresponding to the preamble of claim 1, is known from e.g. US 3 919 026.

The basic materials of which the different parts of the hose are made have a high price/quality ratio. For instance, the spiral can be made of rigid PVC, whereas the tubular layer can be made of flexible PVC. For that purpose, PVC can be additioned with suitable plastifying substances that are useful for increasing the flexibility related properties of the basic plastic material.

A problem arising from said known materials is that the plastifying substances additioned to the PVC tend to migrate towards the rigid PVC. This tendency to migrate is particularly enhanced and critical when the percentages of plastifying substances is relatively low, namely in the 5% range, and such that they cause PVC to become brittle, along with the risk that the reinforcement spiral cracks and eventually breaks. This may give rise to local mechanical failures of the hose that inevitably lead to a decrease in the degree of sealing of the hose, therefore a loss of positive or negative pressure internally thereof. This is particularly true when the hose undergoes even negligible stresses, strains, shears and compressions. In technical jargon this phenomenon is called "cracking".

In order to try and solve the problem posed by cracking, a number of solutions were put forward in the past, among which for example the employment of plastifiers that do not exhibit any migration phenomenon.

A further solution is that of replacing the flexible plastic material with other materials that do not contain any plastifiers, such as PUR (polyurethane) or other plastic materials that do not become brittle as rigid PVC typically does.

However, the above mentioned solutions proved to be disadvantageous from an economical point of view, and little suitable for their employment in the production of hoses pertaining to the law range of the market.

### Summary of the invention

A primary object of the present invention is to provide a reinforced flexible hose provided with a new type of spirally shaped rigid reinforcement that exhibits an enhanced resistance to the cracking phenomenon and that features a remarkable durability in time even when subjected to permanent mechanical stresses, strains and shears such as expansions, shocks and compressions.

A further particular object of the present invention is that of conceiving a hose of the above indicated type that has a relatively simple structure that is also easy to produce and whose production leads to reduction in cost with its structural features remaining the same.

The above objects are accomplished by a reinforced flexible hose according to claim 1 particularly suitable for the suction and transport of liquids and gases.

Suitably, the reinforcement member is in the form of a thread wound to form a substantially helicoidal spiral. The spiral has a minimum diameter that is longer than the inner diameter of said tubular support wall.

The basic material the tubular support wall is made of is the same basic material the reinforcement material is made of, PVC for example, with the addition of suitable plastifying substances.

The plastic material of which the film is made of is chosen among materials that are compatible both with said reinforcement material and with that of said tubular wall so that a mutual adhesion of these elements is promoted.

Preferably, the basic material the barrier film is made of is chosen in the group consisting of polyamides, polyesters, polyurethanes, polyketones, polyethylene copolymers or nitrile rubber.

A further object of the present invention is to provide a method for the production of the hoses according to the invention, said method making it possible to produce them in a cost effective way.

This object is accomplished by means of a method for the production of a reinforced flexible hose according to Claim 7.

The hose obtained by means of the above method protects the material making up the rigid reinforcement material against migration of plastifying substances so that the embrittlement phenomenon is eliminated.

### Brief description of the drawings

Further features and advantages of the present invention will be more apparent from the following description of a preferred but not exclusive embodiment of a reinforced flexible hose according to the invention illustrated by way of not limiting example in the attached table of drawings wherein:
Fig. 1 is a partially sectional perspective view of a segment of a reinforced flexible hose according to the invention,
Fig. 2 illustrates the section of a detail of the hose wall shown in Fig. 1;
Fig. 3 illustrates a sectional view of an extrusion head for the production of the hose shown in Fig. 1;
Fig. 4 illustrates a perspective view of a production step of the hose shown in Fig. 1 at an intermediate production step;
Fig. 5 illustrates a front view of the extrusion head shown in Fig. 3;
Figs. 6, 7, 8 illustrate differently shaped sections of the strip of coextruded plastic material making up the hose according to the invention.

### Description of a preferred form of embodiment

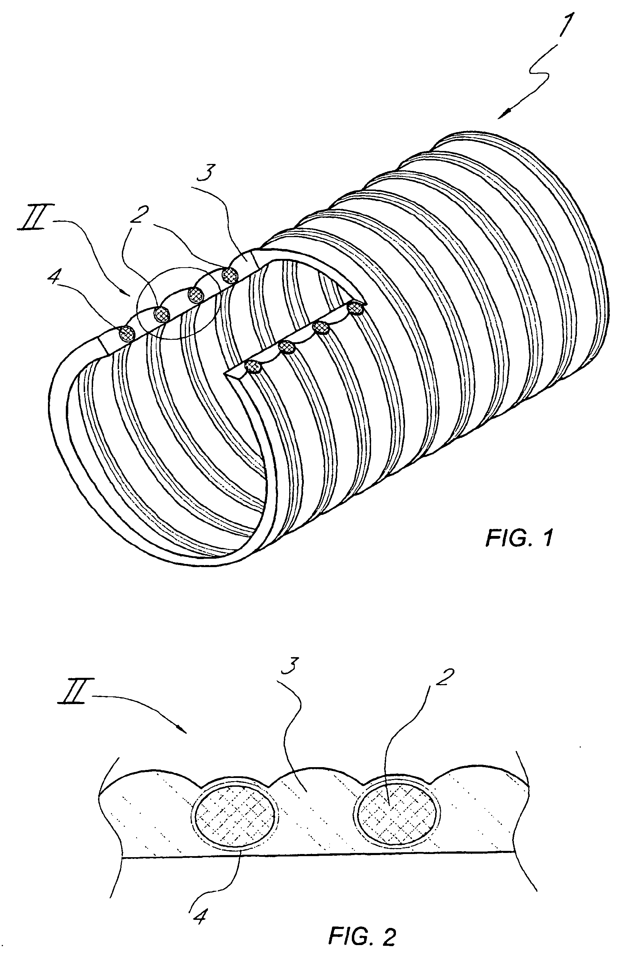

With reference to figures 1 and 2 a flexible hose is illustrated, generally indicated by reference numeral 1, comprising a reinforcement element 2 made of a plastic material, such as substantially rigid PVC, on which a supporting wall 3 is laid of a plastic material, of the PVC type and containing plastifying substances, such that it exhibits a certain flexibility which is more or less enhanced according to the requirements of the final product.

Preferably, reinforcement member 2 is substantially shaped as a thread wound to form a helicoidal spiral whereas supporting wall 3 is coextruded between the coils of reinforcement element 2 so as to form the tubular wall of hose 1.

A peculiar feature of the invention resides in that the reinforcement element 2 is coated with a film 4 made of a suitable plastic material.

The basic material of which film 4 is made is chosen to be such that it forms a barrier that prevents migration of the plastifiers contained in the plastic material of wall 3 towards reinforcement member 2.

Advantageously, the plastic material used for wall 3 coating the rigid spiral is chosen to be such that it results to be compatible and chemically similar to the PVC making up the two hose members so as to promote the molecular adhesion phenomena and to avoid separation of the layers. Such a material is extruded at relatively high temperatures and it will result to be suitable for making up film 4 having an extremely reduced thickness, in the micron range for example.

As a not limiting example, the basic material forming film 4 can be chosen in the group consisting of synthetic resins of the polyamide, polyester, polyurethane, polyketone, polyethylene copolymer, nitrile rubber types.

The thus produced flexible hose 1 will exhibit anti-cracking properties suitable for remarkably increase resistance and durability of the hose in comparison with the hoses found in the prior art.

Advantageously, the materials making up the several components of the hose can be coloured or pigmented with different colours, shades and hues so as to yield to the widest variety of aesthetic effects. Thus, is can be possible to produce ranges or series of easily distinguishable products on account of their colours.

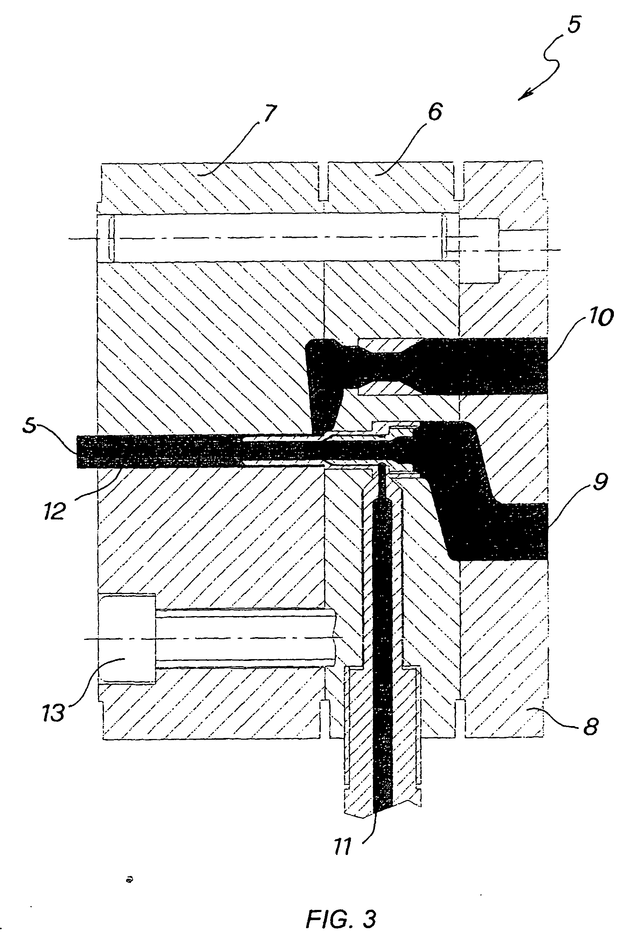

Hose 1 can advantageously be produced by means of a coextrusion process of the several above listed plastic components by means of an extrusion head illustrated in detail in Fig. 3.

In the form of embodiment shown, the extrusion head, overall indicated with reference numeral 5, comprises two sections 6, 7 mutually joined by means of screws, and joined to a supporting plate or frame 8.

Section 6 is provided with at least two inlet channels 9, 10 for respective plastic materials at the fluid or pasty state. In particular, channel 9 fulfils the function of feeding a plastic material of the PVC type for example that is bound to form reinforcement member 2, whereas channel 10 fulfills the function of feeding PVC containing plastifying substances for example bound to form the flexible supporting wall 3.

Channels 9, 10 converge towards a coextrusion chamber that leads outside through an outlet channel or nozzle 12 through which a plastic material strip or ribbon is extruded.

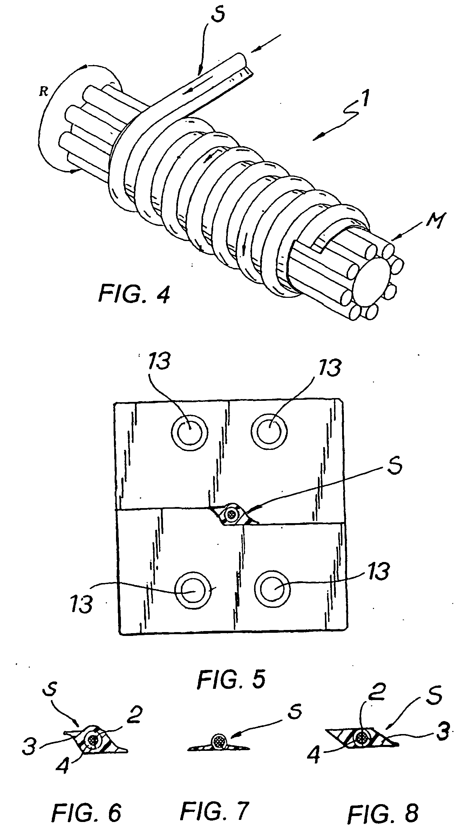

As shown in Fig. 4, strip S still in its pasty state is laid and wound onto a substantially rectilinear rotating mandrel M, following a spirally shaped path, to form the continuous outside surface of hose 1. Thanks to the affinity and compatibility of the extruded thermoplastic materials, a molecular adhesion take space between them during extrusion, which guarantees homogeneity and sealing of the outside surface.

According to the invention, head 5 is provided with a third channel 11, obtained from section 6 for example, for the deposition of a film 4 made of a suitable plastic material onto reinforcement member 2. Said film is suitable to form a barrier that prevents migration of the plastifying substances contained in the supporting wall 3 towards the reinforcement member 2.

Similarly channel 11 converges towards nozzle 12 in such a way that film 4 results to be homogeneously coextruded onto reinforcement - member 2 completely wrapping it. Obviously the diameter and the geometry of channels 9, 10, 11 may be sized in such a way that the desired thicknesses and dimension can be obtained. Moreover, nozzle 12 may be formed so as to obtain a predetermined geometry for strip S, said geometry being suitable for forming tubular supporting wall 3 of the hose.

As shown in detail in Fig. 5 depicting a front view of head, the movable connection between sections 6, 7 of the head by means of screws 13 makes it possible to perform the quick replacement of section 7 with another section wherein an outlet channel or nozzle 12 presents a cross section that is different from the first one. Some examples of said cross sections are schematically shown in Figs. 6, 7, 8. Thus strips of materials having a variety of cross sections can be extruded, which cross sections making it possible to produce hoses 1 having different outside surfaces.

The method according to the present invention for the production of hose 1 employing the above described extrusion head may comprise the following steps.

Extruded thermoplastic materials are firstly heated up to reach their fluid or pasty state, and they are fed along ducts 9, 10, 11 of section 6 of extrusion head 5 up to nozzle 12, through which they are coextruded to form a strip S having a suitable cross section and having an indefinite length.

A peculiar feature of the method according to the invention is that strip S comprises reinforcement member 2 immersed in the tube-like wall 3 with the interposition and coextrusion of film 4, which fulfills the function of forming a barrier that prevents migration of the plastifiers from the material of which wall 3 is made towards member 2.

Strip S is wound to form a coil onto a mandrel M rotating following the direction shown by arrow R and with the coils mutually contacting, when it is still in its pasty state. Strip S is kept on mandrel M for the time necessary for the film 4 material to molecularly adhere both to reinforcement material 2 and to the material making up wall 3. With this process the outside surface of tube 1 thus forms and it is then cooled to ambient temperature.

From reading the above description it is clear that the hose and the method according to the present invention fulfills their objects and aims, and it is specifically highlighted that the hose produced according to the invention is not subject to any embrittlement phenomena. Moreover it is worth emphasising that its production is simple and cost effective.

## Claims

1. Reinforced flexible hose (1) particularly suitable for the suction and transport of liquids and gases, comprising at least one reinforcement member (2) made of a first relatively rigid plastic material that is completely immersed in a substantially tubular supporting wall (3) made of a second plastic material , said second plastic material forming said tubular supporting wall (3) being the same plastic material forming said at least one reinforcement member (2) with the addition of suitable plastifying substances for increasing the flexibility of said second plastic material, **characterised** is that said reinforcement member is homogeneously coated with a film, said film (4) coating said at least one reinforcement member (2) being made of a third plastic material defining a barrier for preventing migration of said plastifying substances from said supporting wall (3) towards said reinforcement member (2).

2. Reinforced flexible hose according to claim 1, **characterised in that** said at least one reinforcement member (2) is substantially thread shaped and it is wound to form a substantially helicoidal spiral having a minimum diameter that is greater than the inner diameter of said supporting wall (3).

3. Reinforced flexible hose according to claim 1 or 2, **characterised in that** said first plastic material is PVC.

4. Reinforced flexible hose according to claim 1, **characterised in that** said third plastic material forming said film (4) is chosen amongst the materials that are compatible both with the material forming said reinforcement member (2) and with the material forming the tubular supporting wall (3) so as to promote the mutual adhesion between said elements.

5. Reinforced flexible hose according to claim 4, **characterised in that** said third plastic material forming said film (4) is chosen in the group consisting of polyamides, polyesters, polyurethanes, polyketones, polyethylene copolymers or nitrile rubber.

6. Reinforced flexible hose according to one or more of the preceding claims, **characterised in that** one or more plastic materials forming said reinforcement member (2), said tubular supporting wall (3) and said film (4) are coloured and pigmented with different colours, shades and hues in comparison with those of the other plastic materials.

7. Method for the production of a reinforced flexible hose according to anyone of claims 1 to 6, comprising the following steps:
a) heating a first plastic material bound to form a relatively rigid reinforcement member (2), and a second plastic material adapted to form a relatively flexible supporting wall (3), up to bringing them to the pasty state;
b) coextruding said pasty materials through an outlet nozzle (12) to form a strip (S) with a suitable cross section and an indefinite length comprising said supporting wall (3) wherein said reinforcement member (2) is immersed;
c) continuous laying said strip (S) at the plastic state onto a substantially rectilinear rotating mandrel (M), along a spirally shaped path having its coils mutually contacting so as to define a substantially tubular and reinforced hose wall (3);
d) keeping said strip (S) on the mandrel for the time necessary to obtain a molecular adhesion of the extrusion materials to form the outside surface of the hose (1);
e) cooling the strip (S) down to ambient temperature for forming the finished hose (1),
wherein said second plastic material is the same as said first plastic material with the addition of suitable plastifiers, **characterised in that** a coextrusion step f) of a third plastic material is carried out onto said reinforcement member (2) to form a barrier against migration of said plastifiers from said tubular wall (3).

8. Method according to claim 7, **characterised in that** said third plastic material is a film (4) homogeneously deposited onto the outside surface of said reinforcement member (2).

9. Method according to claim 8, **characterised in that** said first plastic material, said second plastic material and said third plastic material are introduced in said outlet nozzle (12) for the formation of said strip (S) by means of a respective first conduit (9), second conduit (10) and third conduit (11) which are parts of an extrusion head.

10. Method according to claim 9, **characterised by** providing two sections (6, 7) movably coupled to said outlet nozzle (12) in order to change the shape of the cross section of the strip (S) of coextruded material.

## Patentansprüche

1. Verstärkter biegsamer Schlauch (1), insbesondere geeignet für das Ansaugen und den Transport von Flüssigkeiten und Gasen mit mindestens einem Verstärkungselement (2), das hergestellt ist aus einem ersten relativ steifen Kunststoffmaterial, das vollständig eingetaucht ist in eine im wesentlichen rohrförmige Stützwand (3), die hergestellt ist aus einem zweiten Kunststoffmaterial, wobei das zweite Kunststoffmaterial, das die rohrförmige Stützwand (3) bildet, das selbe Kunststoffmaterial ist, das dieses mindestens eine Verstärkungselement (2) bildet mit dem Zusatz von geeigneten Plastifizierungssubstanzen zum Erhöhen der Biegsamkeit des zweiten Kunststoffmaterials, **dadurch gekennzeichnet, dass** das Verstärkungselement (2) homogen beschichtet ist mit einer Lage (4), die dieses mindestens eine Verstärkungselement (2) einhüllt, das aus einem dritten Kunststoffmaterial hergestellt ist, das ein Hindernis bildet zur Verhinderung des Durchgangs von den Plastifizierungssubstanzen von der Stützwand (3) in Richtung von dem Verstärkungselement (2).

2. Verstärkter biegsamer Schlauch (1) gemäß Anspruch 1, **dadurch gekennzeichnet, dass** das mindestens eine Verstärkungselement (2) im wesentlichen gewindeförmig ist und es gewickelt ist um eine im wesentlichen schraubenförmige Spirale zu bilden mit einem minimalen Durchmesser der größer ist als der innere Durchmesser der Stützwand (3).

3. Verstärkter biegsamer Schlauch (1) gemäß Anspruch 1 oder 2, **dadurch gekennzeichnet, dass** das erste Kunststoffmaterial PVC ist.

4. Verstärkter biegsamer Schlauch (1) gemäß Anspruch 1, **dadurch gekennzeichnet, dass** das dritte Kunststoffmaterial, das die Lage (4) bildet, ausgewählt ist aus dem Materialien, die verträglich sind sowohl mit dem Material, das das Verstärkungselement (2) bildet, als auch mit dem Material, das die rohrförmige Stützwand (3) bildet, um so die gegenseitige Anbindung zwischen diesen Elementen zu fördern.

5. Verstärkter biegsamer Schlauch (1) gemäß Anspruch 4, **dadurch gekennzeichnet, dass** das dritte Kunststoffmaterial, das die Lage (4) bildet, ausgewählt ist aus der Gruppe, die besteh aus Polyamiden, Polyestern, Polyurethanen, Polyketonen, polyetylenen Kopolymeren oder Nitrilgummi.

6. Verstärkter biegsamer Schlauch (1) gemäß einem oder mehreren der vorher gehenden Ansprüche, **dadurch gekennzeichnet, dass** eines oder mehrere der Kunststoffmaterialien, die das Verstärkungselement (2), die Stützwand (3) und die Lage (4) bilden, farbig und pigmentiert sind mit verschiedenen Farben, Schattierungen und Farbtönen verglichen mit denen der anderen Kunststoffmaterialien.

7. Verfahren zur Herstellung eines verstärkten biegsamen Schlauchs gemäß irgendeinem der Ansprüche 1-6,
**gekennzeichnet durch**:
a) Erhitzen eines ersten Kunststoffmaterials, das eine relativ steifes Verstärkungselement (2) bilden soll und ein zweites Kunststoffmaterial, das angepasst ist eine relativ biegsame Stützwand (3) zu bilden, bis es einen teigförmigen Zustand erreicht,
b) Koextrudieren des teigförmigen Materials **durch** eine Auslassdüse (12), um einen Streifen (S) zu bilden mit einem geeigneten Querschnitt und einer unbestimmten Länge, der die Stützwand (3) umfasst, in die das Verstärkungselement (2) eingetaucht ist,
c) Kontinuierliches Legen des Streifens (S) in dem verformbaren Zustand auf einen im wesentlichen geradlinig drehenden Kern (M) entlang einem spiralförmigen Weg, wobei dessen Spulen gegenseitig anliegen um so eine im wesentlichen rohrförmige und verstärkte Schlauchwand (3) zu bilden,
d) Halten des Streifens (S) auf dem Kern so lange erforderlich, um eine molekulare Anbindung zu erhalten der extrudierten Materialien, um die äußere Oberfläche des Schlauchs (1) zu bilden,
e) Kühlen des Streifens (S) bis auf eine Umgebungstemperatur zum Bilden des fertigen Schlauchs (1),
wobei das zweite Kunststoffmaterial das selbe ist wie das erste Kunststoffmaterial mit dem Zusatz geeigneter Weichmacher, **dadurch gekennzeichnet, dass** ein Koextrusionsschritt (f) eines dritten Kunststoffmaterials durchgeführt wird auf das Verstärkungselement (2), um ein Hindernis zu bilden gegen den Durchgang des Weichmachers von der rohrförmigen Wand (3).

8. Verfahren gemäß Anspruch 7, **dadurch gekennzeichnet, dass** das dritte Kunststoffmaterial eine Lage (4) ist, die homogen abgelagert ist auf der äußeren Oberfläche des Verstärkungselements (2).

9. Verfahren gemäß Anspruch 8, **dadurch gekennzeichnet, dass** das erste Kunststoffmaterial, das zweite Kunststoffmaterial und das dritte Kunststoffmaterial in die Auslassdüse (12) eingeführt werden zum Bilden des Streifens (S) mittels einer jeweils ersten Leitung (9), zweiten Leitung (10) und dritten Leitung (11), die Teile eines Extrusionskopfs sind.

10. Verfahren gemäß Anspruch 9, **dadurch gekennzeichnet, dass** zwei Abschnitte (6, 7) vorgesehen sind, die beweglich verbunden sind mit der Auslassdüse, um die Form des Querschnitts des Streifens (S) aus koextrudiertem Material zu ändern.

## Revendications

1. Tuyau souple renforcé (1) particulièrement approprié pour l'aspiration et le transport de liquides et de gaz, comprenant au moins un élément de renforcement (2) fait d'une première matière plastique relativement rigide, qui est complètement noyé dans une paroi porteuse (3) sensiblement tubulaire faite d'une deuxième matière plastique, ladite deuxième matière plastique qui forme ladite paroi porteuse tubulaire (3) étant la même matière que celle qui forme ledit au moins un élément de renforcement (2), avec l'addition de substances plastifiantes appropriées pour accroître la souplesse de ladite deuxième matière plastique, **caractérisé en ce que** ledit élément de renforcement est revêtu de façon homogène d'un film (4) qui recouvre ledit au moins un élément de renforcement (2) et qui est fait d'une troisième matière plastique définissant une barrière destinée à empêcher la migration desdites substances plastifiantes de ladite paroi porteuse (3) vers ledit élément de renforcement (2).

2. Tuyau souple renforcé selon la revendication 1, **caractérisé en ce que** ledit au moins un élément de renforcement (2) est sensiblement en forme de filet de vis et qu'il est enroulé de manière à former une spirale sensiblement hélicoïdale ayant un diamètre minimum qui est plus grand que le diamètre intérieur de ladite paroi porteuse (3).

3. Tuyau souple renforcé selon la revendication 1 ou 2, **caractérisé en ce que** ladite première matière plastique est le PVC.

4. Tuyau souple renforcé selon la revendication 1, **caractérisé en ce que** ladite troisième matière plastique qui forme ledit film (4) est choisie parmi les matières qui sont compatibles à la fois avec la matière qui forme ledit élément de renforcement (2) et avec la matière qui forme la paroi porteuse tubulaire (3), de manière à favoriser l'adhérence mutuelle entre lesdits éléments.

5. Tuyau souple renforcé selon la revendication 4, **caractérisé en ce que** ladite troisième matière plastique qui forme ledit film (4) est choisie dans le groupe comprenant des polyamides, polyesters, polyuréthanes, polycétones, copolymères du polyéthylène ou caoutchouc nitrile.

6. Tuyau souple renforcé selon une ou plusieurs des revendications précédentes, **caractérisé en ce qu'**une ou plusieurs matières plastiques qui forment ledit élément de renforcement (2), ladite paroi porteuse tubulaire (3) et ledit film (4) est ou sont colorée(s) et pigmentée(s) avec des couleurs, nuances et teintes différentes de celles des autres matières plastiques.

7. Procédé de production d'un tuyau souple renforcé selon une quelconque des revendications 1 à 6, comprenant les étapes suivantes :
a) chauffer une première matière plastique destinée à former un élément de renforcement (2) relativement rigide et une deuxième matière plastique adaptée pour former une paroi porteuse (3) relativement souple jusqu'à les mettre à l'état pâteux ;
b) co-extruder lesdites matières pâteuses à travers une filière de sortie (12) pour former une bande (S) ayant une section transversale appropriée et une longueur indéfinie, qui constitue ladite paroi porteuse (3) dans laquelle ledit élément de renforcement (2) est noyé ;
c) déposer en continu ladite bande (S) à l'état plastique sur un mandrin tournant (M) sensiblement rectiligne, en suivant un trajet de forme hélicoïdale dont les spires sont en contact mutuel de manière à définir une paroi de tuyau (3) sensiblement tubulaire et renforcée ;
d) maintenir ladite bande (S) sur le mandrin pendant le temps nécessaire pour obtenir une adhérence moléculaire des matières extrudées pour former la surface extérieure du tuyau (1);
e) refroidir la bande (S) à la température ambiante pour former le tuyau fini (1), dans lequel ladite deuxième matière plastique est la même que ladite première matière plastique avec addition de plastifiants appropriés, **caractérisé en ce qu'**une étape de co-extrusion (f) d'une troisième matière plastique est exécutée sur ledit élément de renforcement (2) pour former une barrière à l'encontre de la migration desdits plastifiants en provenance de ladite paroi tubulaire (3).

8. Procédé selon la revendication 7, **caractérisé en ce que** ladite troisième matière plastique est un film (4) déposé de façon homogène sur la surface extérieure dudit élément de renforcement (2).

9. Procédé selon la revendication 8, **caractérisé en ce que** ladite première matière plastique, ladite deuxième matière plastique et ladite troisième matière plastique sont respectivement introduites dans ladite filière de sortie (12) servant à la formation de ladite bande (S) à l'aide d'un premier conduit (9), d'un deuxième conduit (10) et d'un troisième conduit (11) qui font partie de la tête d'extrusion.

10. Procédé selon la revendication 9, **caractérisé en ce qu'**on prévoit deux sections (6, 7) couplées de façon amovible à ladite filière de sortie (12) de manière à changer la forme de la section de la bande (S) de matière co-extrudée.
